# EUROPEAN PATENT SPECIFICATION

(11) **EP 3 088 253 B1**
(45) Date of publication and mention of the grant of the patent: **05.01.2022**
(21) Application number: 15165374.8
(22) Date of filing: 28.04.2015
(51) Int. Cl.: B60N 2/75, B60R 7/04

(54) **ARM REST FOR A VEHICLE SEAT**
ARMLEHNE FÜR EINEN FAHRZEUGSITZ
ACCOUDOIR POUR UN SIÈGE DE VÉHICULE

(43) Date of publication of application: 02.11.2016
(73) Proprietor: Volvo Car Corporation, 40531 Göteborg (SE)
(72) Inventor: Göthlin, Jonas, 42343 Torslanda (SE)
(74) Representative: Valea AB

(56) References cited:
- DE-A1-102011 120 881
- GB-A- 2 413 270
- US-A- 5 067 625
- US-A1- 2004 080 173
- US-A1- 2009 072 565

## Description

### TECHNICAL FIELD

The present invention relates to an arm rest having an arm rest compartment with an opening for storing items. The arm rest comprises a lid which permits or prevents access to the arm rest compartment. The lid can be opened in a favorable manner and be positioned in a favorable opened position with the forward end of the lid pointing downwards and the rearward end of the lid pointing upwards.

### BACKGROUND OF THE INVENTION

Arm rests for vehicle seats which are situated between two vehicle seats are generally referred to as tunnel arm rests. For a driver, or passenger, sitting in the vehicle seat the tunnel arm rest provide a comfortable rest surface for the arm of the user. Arm rests also tend to have a compartment which can be accessed by opening a lid of the arm rest. Such arm rest compartments can be used to store items such as sun glasses, wallets, keys, papers. Some arm rests compartments are even known to have coolers for storing cooled beverage.

To access the arm rest compartment, the user generally needs to pivot the lid from a closed position to an opened position. This has mainly been done by lifting the forward end of the lid, i.e. that end of the lid which is pointing in same direction as the users hand when a user is resting the arm on the arm rest in an intended manner. A hinge is pivotally connecting the rearward end of the lid with the arm rest compartment so that the lid is pivotally opened upon lifting the forward end of the lid. When a driver needs to access the arm rest compartment, the driver thus needs to move the forward end of the lid and thus his own arm, to a position which can be difficult to reach when positioned normally in the vehicle seat. The opening of the lid becomes even more critical when driving the vehicle in a traffic environment.

A solution which is directed to providing an alternative opening mechanism for the lid of the arm rest is disclosed in the published Japanese patent no. JP 4293452 B2. The solution comprises an arm rest compartment with a pivotable lid. The lid is attached with a hinge arm which is rigidly attached to the lid and pivotally attached to the arm rest compartment. A guide and a track assist in guiding the lid along a predetermined path. The guiding means raises the forward edge of the lid with respect to the compartment and the edges thereof when displaced from a closed position to an opened position.

The patent publication no. KR20020058105A discloses a pivotable lid for an arm rest. The lid is hinged via hinge arms in such a manner that the lid can slide horizontally a short distance along the opening of the compartment before the lid is pivoted. The forward end of the lid is pointing upwards when the lid is in an opened position.

The published German patent application no. DE 10 2011 120881 A1 discloses a center console with an openable lid. The lid may be pivotally arranged at a center section of the lid but is opened in a traditional manner.

According to its abstract, the published patent application GB 2 413 270 A discloses a seat assembly for a vehicle. The seat assembly comprises a seat back that includes a movable seat back portion which can be moved between a closed position in which the seat back portion defines a part of the back rest surface, and an opened position in which the seat back portion defines an armrest. Further, the seat back portion also defines a storage volume for luggage. A closure member, such as a hinged lid or a pair of flaps, may be provided to prevent access to the storage volume.

According to its abstract, US 5 067 625 A discloses a device for opening and closing a lid of a box consisting of a housing and the lid includes a first link having one end linked to the housing at the edge of the opening and the other end linked to the lid and a second link extending parallel to the first link and having one end like the aforesaid one end of the first link linked to the lid and the other end linked to the housing at the edge of the opening. The lid is supported such that it can be opened and closed in two directions about the links.

According to its abstract, US 2009/072565 A1 discloses a console and armrest assembly for a vehicle, which includes a console base defining a first storage area and a first storage opening for providing access to the first storage area. A first intermediate member is configured to selectively close the first storage area opening. The first intermediate member defines a second storage area in a second storage area opening for providing access to the second storage area. A second intermediate member is configured to selectively close the second storage area opening. The second intermediate member defines a third storage area and a third storage area opening for providing access to the third storage area. An armrest cover is configured to selectively close the third storage area opening.

It has been found that the mentioned solutions above have the drawback of not being very easy to access, i.e. open, when sitting in a normal position in the vehicle seat. They are further difficult to open when sitting behind the arm rest and the associated vehicle seat(s), i.e. in the back seat. If the arm rest compartment needs to be accessed from behind, the user needs to stretch across the length of the lid when opening the lid, which can be an uncomfortable position and a positon difficult to reach especially when buckled.

### SUMMARY

It is an object of the present invention to provide for a solution, or to at least reduce some of the drawbacks, or to at least provide for a useful alternative. The objective is at least partly met by an arm rest for a vehicle seat according to claim 1. The arm rest comprises a pivotable lid and an arm rest compartment having an opening. The opening has a first and a second end. The lid has a forward end and a rearward end. The lid is displaceable between an opened position and a closed position. The lid is pivotally arranged so that when it is in the opened position, the forward end of the lid is arranged proximal of the opening of the arm rest compartment and the rearward end of the lid is arranged distal to the opening of the arm rest compartment with respect to a vertical axis.

By pivotally arrange the lid so that the forward end of the lid is arranged proximal of the opening of the arm rest compartment and the rearward end of the lid is arranged distal to the opening of the arm rest compartment with respect to a vertical axis, the lid is in a very favourable position after being opened. It further enables the lid to be opened in an easy manner due to the end position. The mentioned arm rest provides an arm rest which easily can be opened from the back seat, e.g. by lifting the rearward end of the lid in an upwardly direction. A user sitting in the vehicle seat associated with the arm rest can further easily open the lid to access the arm rest compartment simply by moving the arm in a backwardly motion, as the front end of the lid does not need to be raised when opening the lid.

The lid is pivotally arranged to the arm rest compartment via a hinge arm. The hinge arm has a first and a second end. It should be noted that lid may be pivotally arranged to the arm rest compartment via one or more hinge arms. The hinge arms can be identical or of different type dependent on exactly how the lid is intended to be pivoted. An important aspect is however that the forward end of the lid is arranged proximal of the opening of the arm rest compartment and the rearward end of the lid is arranged distal to the opening of the arm rest compartment with respect to a vertical axis when the lid is in the opened position.

The hinge arm, or each of the one or more hinge arms, may be formed by a straight element extending between the first and second end of the hinge arm. The straight element is preferably a substantially rigid, so that the straight element does not bend when opening or closing the lid.

The first end of the hinge arm may be pivotally connected to the arm rest compartment substantially at the first end of the opening. In this sense, the first end of the opening of the lid is the rearward end of the opening. The second end of the hinge arm may be pivotally connected to the lid at a center section of the lid, preferably substantially at the center of the lid between the forward end and the rearward end of the lid. By arranging the hinge arm at a center section of the lid the lid can be pivoted so that the forward end of the lid is maintained along the opening of the arm rest compartment when displacing the lid.

When the lid of the arm rest is in the opened position, the forward end of the lid may be positioned substantially adjacent the opening of the arm rest compartment and/or preferably substantially adjacent the first end of the hinge arm. It is desirable that the angle between the lid and the hinge arm when the lid is in the opened positon is relatively low. This enables the forward end of the lid to be readily displaced back so that a large portion of the opening, preferably the whole opening, can be made available to access the arm rest compartment. The angle between the hinge arm and the lid when the lid is in the closed positon is preferably relatively large, i.e. in the order of 190-160 degrees. In an embodiment, the hinge arm is substantially parallel with the lid when the lid is in the closed position, and preferably substantially parallel with the lid when the lid is in the opened position.

The forward end of the lid is enabled to slide adjacent to, or in the proximity of, the opening of the arm rest compartment. The opening can be provided with a dedicated slide surface for this purpose. A slide surface is specifically adapted to better withstand wear imparted from the forward end of the lid when sliding along the opening of the arm rest compartment. Likewise, the forward end of the lid may be provided with a dedicated slide surface, e.g. formed by a wear resistant material. During the displacement the rearward end of the lid is vertically displaced with respect to the vertical axis in an upwardly direction.

The forward end of the lid may be enabled to slide adjacent to, or in the proximity of, the opening of the arm rest compartment at least 40 %, more preferably at least 60 %, of the length of the opening of the arm rest compartment, when displacing the lid from a closed position to an open position. The forward end of the lid may be enabled to slide adjacent to, or in the proximity of, substantially the full length, or the full length, of opening of the arm rest compartment, when displacing the lid from a closed position to an open position. During the mentioned displacement the rearward end of the lid is vertically displaced with respect to the vertical axis in an upwardly direction. As described above, the forward end of the lid slides adjacent, or in the proximity of, the opening of the arm rest compartment when displacing the lid from a closed position to an open position. The same may apply, as described above, when the lid is displaced from the opened to the closed position. The lid, and especially the forward end of the lid, may thus follow a symmetrical path when being displaced between the opened and closed position.

The lid of the arm rest can be opened by displacing the rearward end of the lid in an upwardly direction with respect to the vertical axis. When the rearward end of the lid is displaced in an upwardly direction, the forward end of the lid slides along the opening of the arm rest compartment.

The lid of the arm rest, and/or arm rest compartment, may comprise retaining means. The retaining means of the lid are arranged to retain the lid in the opened position and/or in the closed position. Such retaining means can be a magnet, a snap-in, or snap-on, mechanism, a protrusion which is adapted to cooperate with a groove or the like.

The lid of the arm rest can thus be opened in a favorable manner and be positioned in a favorable opened position with the forward end of the lid pointing downwards and the rearward end of the lid pointing upwards. The hinge arm is pivotally connected to the lid so that the forward end of the lid is pointing downwards and the rearward end of the lid is pointing upwards when the lid is in the opened position.

According to an aspect, the present invention also relates to a kit comprising a vehicle seat and at least one arm rest according to any one of the accompanying claims, or as disclosed herein. In a preferred embodiment, the arm rest is a tunnel arm rest positioned between a first and a second vehicle seat.

### BRIEF DESCRIPTION OF THE DRAWINGS

Non-limiting embodiments of the present invention will be described with reference to the accompanying drawings in which;
figure 1a shows an exemplary arm rest for a vehicle seat, wherein the lid is in a closed position;
figure 1b shows the arm rest of figure 1, wherein the lid is an opened position with the forward end of the lid pointing upwards away from the opening;
figure 2 shows the arm rest of figure 1, wherein the lid is in an opened position with the forward end of the lid pointing towards the opening;
figure 3a shows an embodiment of an arm rest for a vehicle seat according to the invention, wherein the lid is in a closed position;
figure 3b show the arm rest of figure 3a with the lid in an opened position;
Figure 4 shows the arm rest of figure 3b with a view towards the rear of the arm rest and the underside of the lid and;
figure 5 shows a schematic view of towards the side of the lid.

### DETAILED DESCRIPTION OF PREFERRED EMBODIMENTS

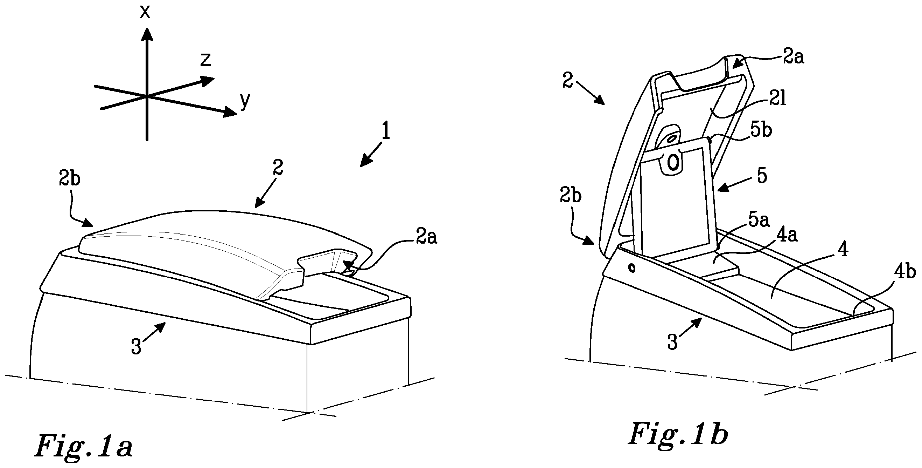

Figures 1a-1b show an arm rest 1 for a vehicle seat (not shown). The arm rest 1 comprises a lid 2 and an arm rest compartment 3. The arm rest compartment 3 can be used to store human necessities such as gloves, keys, pens, paper, sun glasses or the like. The arm rest 1 is advantageously positioned between two seats, such as a first and a second front seat of a vehicle, such arm rests are generally referred to as tunnel arm rests. The arm rest 1 may however be a side arm rest e.g. arranged between a vehicle door and the vehicle seat associated with the vehicle door. The lid 2 is openable so that the arm rest compartment 3 is accessible via an opening 4. The opening 4 has a first and a second end 4a, 4b.

For the purpose of orientation, a vertical axis X corresponds to the height of the arm rest 1, a horizontal transverse axis Z corresponds to the width of the arm rest 1 and a horizontal longitudinal axis Y corresponds to the length of the arm rest 1. A vehicle seat has a back rest and a seat cushion. The back rest is positioned at one end of the seat cushion. Herein, the back rest is positioned in the rearward end of the seat cushion, and a user sitting on the seat cushion generally has his or hers knees at the forward end of the seat cushion. Hence when referring to a forward or rearward end of an element herein, it is meant with respect to a vehicle seat associated with the arm rest as outlined above.

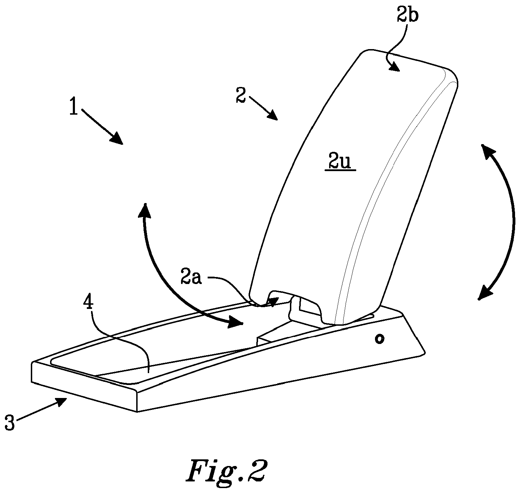

Figure 1b shows the arm rest 1 with the lid 2 in an opened position and with the forward end 2a pointing upwards and the reward end of the lid 2 pointing downwards. A hinge arm 5 is pivotally arranged between the lid 2 and the arm rest compartment 3 pivotally connecting them and enabling the lid 2 to be opened and closed. The lid 2 is thus displaceable between an opened position as shown in figure 1b and figure 2, to a closed position, as shown in figure 1a. The lid 2 has a forward end 2a and a rearward end 2b. The forward end 2a of the lid 2 is intended to be pointing in a forward direction of a user sitting in the vehicle seat, and the rearward end 2b of the lid 2 is intended to be pointing in the opposite direction of the forward direction.

The lid 2 is connected to the arm rest compartment 3 via a hinge arm 5. The hinge arm 5 has a first and a second end 5a, 5b and longitudinal sides extending there between giving the lid 2 a substantially rectangular shape. The first end 5a of the hinge arm 5 is pivotally connected to the arm rest compartment 3, and more precisely to one end of the arm rest compartment 3. The second end 5b of the hinge arm 5 is pivotally attached to the lid 2, substantially at the center of the lid 2 with respect to its longitudinal extension. This enables the lid 2 to pivot about the pivot point formed by the pivot connection like a swing if the arm rest is not provided with other features restricting the movement of the lid.

The hinge arm 5 can have different shapes. In the shown embodiment the hinge arm 5 is a straight hinge arm. It is advantageously rigid in terms of that it does not bend during normal use. In the shown embodiment the hinge arm 5 has the form of rectangular plate pivotally attached to the lid 2 and the arm rest compartment 3 at each corner of the rectangular plate. One or more hinge arms can optionally be used, e.g. two hinge arms, such as one at either longitudinal side of the lid 2.

Figure 2 shows the arm rest 1 of figures 1a-1b with the lid 2 in the opened position. As can be noticed, the lid 2 is positioned so that the forward end 2a is pointing downwards, i.e. towards the opening 4 of the arm rest compartment 3. Further, the rearward end 2b of the lid 2 is pointing upwards, i.e. its distal from the opening 4 of the arm rest compartment 3. The pivot point formed by the pivot connection to the hinge arm 5 is thus positioned between the forward end 2a and the rearward end 2b of the lid 2 when the lid 2 is positioned in the opened positon. The lid 2 can thus be pivotable on the hinge arm 5 (not shown in figure 2) substantially as indicated by the arrows in figure 2.

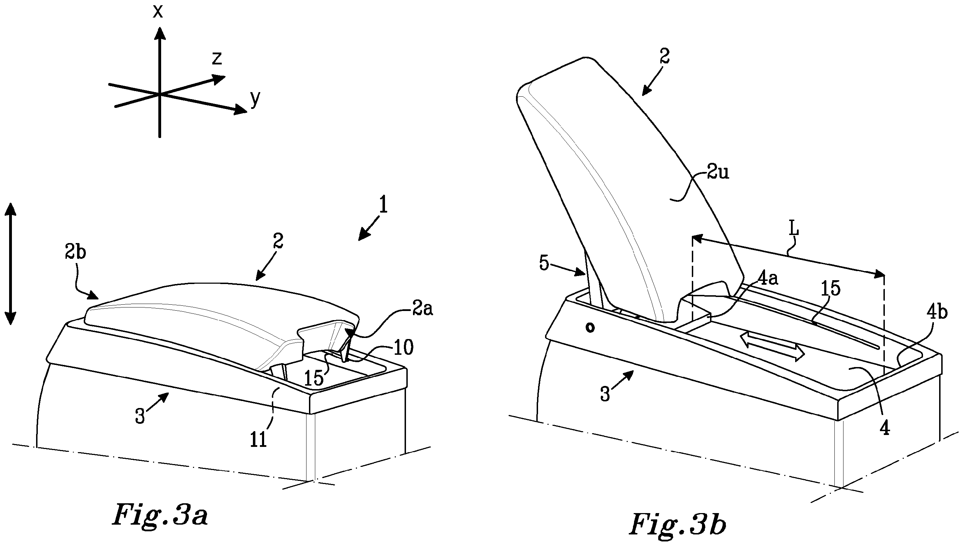

Figures 3a-3b shows an embodiment of the arm rest 1 with a hinged lid in the same manner as described above. The same features will be given the same reference numbers. Figures 3a-3b show the arm rest 1 comprising the lid 2 and the arm rest compartment 3. The lid 2 has a forward end 2a and a rearward end 2b. Figure 3a shows the lid 2 in a closed positon and figure 3b shows the lid 2 in an opened positon. The lid 2 comprises at least one guiding pin 10, in the shown embodiment a first and a second guiding in 10, 11. The first and the second guiding pins 10, 11 are arranged at the forward end 2a of the lid 2 and adapted to cooperate with guiding tracks 15. When displacing the lid 2 between the opened and the closed position, the forward end 2a of the lid 2 remains in a position close to the opening 4 of the arm rest compartment 3. The forward end 2a for the lid 2 is thus displaced along the opening 4 of the arm rest compartment 3 substantially as indicated by the arrow in figure 3b. The rearward end 2b of the lid 2 is displaced in a vertical direction as indicated by the arrow in figure 3a.

As can be noticed, the lid 2 has been pivoted so that the forward end 2a is pointing downwards, i.e. towards the opening 4 of the arm rest compartment 3. Further, the rearward end 2b of the lid 2 is pointing upwards, i.e. away from the opening 4 of the arm rest compartment 3.

The guiding tracks 15 are arranged at the opening 4 of the arm rest compartment 3 and in the shown embodiment on the inside of the opening 4. It is possible that the opening 4 of the arm rest compartment has a guiding pin or sleeve, and the lid 2 of the arm rest 1 has one or more guiding tracks instead.

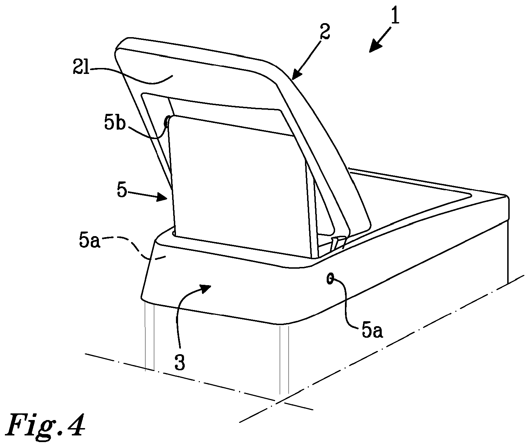

Figure 4 shows the arm rest 1 of figure 3b from behind. The hinge arm 5 is arranged substantially in a similar manner as described with reference to figure 1b. The hinge arm 5 has a first and a second end 5a, 5b. The first end 5a of the hinge arm 5 is pivotally connected to the arm rest compartment 3, and more precisely to one end of the arm rest compartment 3. The second end 5b of the hinge arm 5 is pivotally attached substantially at the center of the lid 2.

Both the embodiments described above have the advantage of enabling a user to open the lid to the arm rest compartment by lifting the lid 2 in the rearward end 2b. This enables a user which is sitting in a vehicle behind the vehicle seat to which the arm rest 1 is associated, to easily open the lid by lifting the rearward end 2b of the lid 2 in an upwardly direction. In an embodiment according to the invention, the forward end 2a of the lid 2 slides adjacent to, or in the proximity of, the opening of the arm rest compartment, at least along a portion of the opening, when displacing the lid 2 from a closed position to an open position.

The opening 4 of the arm rest compartment 3 has substantially a rectangular form with a length and a width. The form of the opening may have other forms; it can be oval for example. Independently of the form of the opening, the opening has a length. The length L of the opening is indicated by the arrow in figure 3b. The forward end 2a of the lid 2 preferably slides adjacent to, or in the proximity of, the opening 4 of the arm rest compartment at least 40 %, preferably at least 60 %, of the length L of the opening 4, preferably substantially the whole length L of the opening 4, of the arm rest compartment 3 when displacing the lid 2 from a closed position to an open position. During this displacement the rearward end 2b of the lid 2 is vertically displaced with respect to the vertical axis X. Likewise, if the rearward end 2b of the lid 2 is raised in an upwardly direction to open the lid 2 of the arm rest 1, the forwards end 2a of the lid 2 will be displaced along a portion of the opening 4.

The lid 2 of the arm rest 1 can be provided an electrical motor to enable an automatic opening and/or closing of the lid 2 if desirable. This has been found especially suitable when the arm rest is provided with a guiding track and a guiding pin arrangement to guide the forward end of the lid along the opening of the arm rest compartment, such as described above.

With reference to figures 1b, 2 3b and 4; the lid 2 has an upper side 2u and a lower side 21. The upper side 2u is facing upwards when the lid 2 is closed and forms the rest surface upon which a portion of the users arm is intended to rest when in use. The lower side 2l of the lid 2 is facing downward to the arm rest compartment 3 when the lid 2 is in the closed position.

As is noticeable in figure 2 and 3b, the upper side 2u of the lid 2, when the lid 2 is in the opened position, is substantially facing in a forward direction. The underside 2u of the lid 2 is facing substantially in a backward direction. In a general manner, an arm rest for a vehicle comprising a pivotable lid and an arm rest compartment having an opening. The opening has a first and a second end. The lid has a forward end and a rearward end, the lid is displaceable between an opened position and a closed position. The lid has an upper and a lower side. The lid is pivotally arranged so that when it is in the opened position, the forward end of the lid is substantially pointing downwards, and the rearward end of the lid is substantially pointing upwards so that the upper side of the lid is facing substantially in a forward direction.

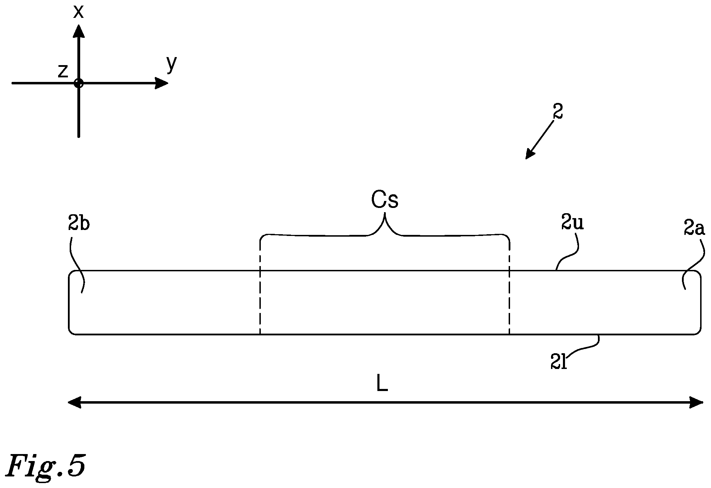

Figure 5 shows a schematic view of the lid 2 towards the longitudinal side. Figure 5 shows the upper and the lower side 2u, 2l and the forward end 2a and the rearward end 2b of the lid 2. For the purpose of orientation, the X, Y and Z axis are indicated. The second end of the hinge arm (not shown) can be attached to the lid 2 substantially at the center of the lid 2. However, it is within the boundaries of the present invention that the second end of the hinge arm of attached to the lid at a center section Cs. The center section Cs is indicated in figure 5 by the bracket Cs and can be identified by viewing the lid as shown in figure 5. The center section has an extension not exceeding 40 %, preferably no more than 33 %, of the length L of the lid 2. The center section can be symmetrically positioned between the forward end 2a and the rearward end 2b of the lid 2. By arranging the second end of the hinge arm somewhere in the center section Cs of the lid, the lid 2 can be pivoted and opened substantially as described above. It is advantageous that the hinge arm is attached to the lid at a center section Cs which has an extension not exceeding 20 % of the length L of the lid.

## Claims

1. An arm rest (1) for a vehicle seat, said arm rest (1) comprising a pivotable lid (2) and an arm rest compartment (3) having an opening (4), said opening (4) having a first and a second end (4a, 4b), said lid (2) having a forward end (2a) and a rearward end (2b), reference to said forward (2a) or rearward end (2b) of said arm rest being meant with respect to a vehicle seat associated with said arm rest, said lid (2) being displaceable between an opened position and a closed position, wherein said lid (2) is pivotally arranged so that when being in said opened position, said forward end (2a) of said lid (2) is arranged proximal of said opening (4) of said arm rest compartment (3) and said rearward end (2b) of said lid (2) is arranged distal to said opening (4) of said arm rest compartment (3) with respect to a vertical axis (x), such that said forward end (2a) of said lid (2) is pointing downwards and said rearward end (2b) of said lid (2) pointing upwards, wherein said lid (2) is pivotally arranged to said arm rest compartment via a hinge arm (5), said hinge arm (5) having a first and a second end (5a, 5b), and wherein said forward end (2a) of said lid (2) is enabled to slide adjacent to, or in the proximity of, said opening (4) of said arm rest compartment (3), when displacing said lid (2) from said closed position to said open position, during which displacement said rearward end (2b) of said lid (2) is vertically displaced with respect to said vertical axis (x) in an upwardly direction.

2. The arm rest according to claim 1, wherein said hinge arm (5) is formed by a straight element extending between said first and second end (5a, 5b) of said hinge arm (5).

3. The arm rest according to claim 1 or 2, wherein said first end (5a) of said hinge arm (5) is pivotally connected to said arm rest compartment (3) substantially at said first end (4a) of said opening (4), and said second end (5b) of said hinge arm (5) is pivotally connected to said lid (2) at a center section (Cs) of said lid (2), more preferably substantially at the center of said lid (2) between said forward end (2a) and said rearward end (2b) of said lid (2).

4. The arm rest according to any one of the preceding claims, wherein when said lid (2) of said arm rest (1) is in said opened position, said forward end (2a) of said lid (2) is positioned substantially adjacent said opening (4) of said arm rest compartment (3) and/or preferably substantially adjacent said first end (5a) of said hinge arm (5).

5. The arm rest according to any one of the preceding claims, wherein said forward end (2a) of said lid (2) is enabled to slide adjacent to, or in the proximity of, said opening (4) of said arm rest compartment (3) at least 40 %, preferably at least 60 %, of the length (L) of the opening (4) of the arm rest compartment (3), when displacing said lid (2) from said closed position to said open position, during which displacement said rearward end (2b) of said lid (2) is vertically displaced with respect to said vertical axis (x) in said upwardly direction.

6. The arm rest according to any one of the preceding claims, wherein said lid (2) of said arm rest (1) comprises retaining means, said retaining means of said lid (2) being arranged to retain said lid (2) in said opened position.

7. A kit comprising a vehicle seat and an arm rest (1) according to any one of the preceding claims, said vehicle seat being associated with said arm rest.

## Patentansprüche

1. Armlehne (1) für einen Fahrzeugsitz, wobei die Armlehne (1) einen schwenkbaren Deckel (2) und ein Armlehnenfach (3) mit einer Öffnung (4) umfasst, wobei die Öffnung (4) ein erstes und ein zweites Ende (4a, 4b) hat, wobei der Deckel (2) ein vorderes Ende (2a) und ein hinteres Ende (2b) hat, wobei vorderes Ende (2a) oder hinteres Ende (2b) der Armlehne in Bezug auf einen der Armlehne zugeordneten Fahrzeugsitz zu verstehen ist, wobei der Deckel (2) zwischen einer geöffneten Position und einer geschlossenen Position verschiebbar ist, wobei
der Deckel (2) schwenkbar angeordnet ist, so dass, bezüglich einer vertikalen Achse (x), das vordere Ende (2a) des Deckels (2), wenn dieser in der geöffneten Position ist, proximal zu der Öffnung (4) des Armlehnenfachs (3) angeordnet ist und das hintere Ende (2b) des Deckels (2) distal zu der Öffnung (4) des Armlehnenfachs (3) angeordnet ist, so dass das vordere Ende (2a) des Deckels (2) nach unten weist und das hintere Ende (2b) des Deckels (2) nach oben weist,
wobei der Deckel (2) über einen Scharnierarm (5) schwenkbar an dem Armlehnenfach angeordnet ist, wobei der Scharnierarm (5) ein erstes und ein zweites Ende (5a, 5b) hat, und wobei das vordere Ende (2a) des Deckels (2) in die Lage versetzt wird, benachbart oder in der Nähe der Öffnung (4) des Armlehnenfachs (3) zu gleiten, wenn der Deckel (2) aus der geschlossenen Position in die offene Position verschoben wird, wobei das hintere Ende (2b) des Deckels (2) während des Verschiebens vertikal bezüglich der vertikalen Achse (x) in eine nach oben gehende Richtung verschoben wird.

2. Armlehne nach Anspruch 1, wobei der Scharnierarm (5) durch ein gerades Element gebildet ist, das sich zwischen dem ersten und dem zweiten Ende (5a, 5b) des Scharnierarms (5) erstreckt.

3. Armlehne nach Anspruch 1 oder 2, wobei das erste Ende (5a) des Scharnierarms (5) im Wesentlichen an dem ersten Ende (4a) der Öffnung (4) schwenkbar mit mit dem Armlehnenfach (3) verbunden ist und das zweite Ende (5b) des Scharnierarms (5) an einem mittleren Abschnitt (Cs) des Deckels (2) schwenkbar mit dem Deckel (2) verbunden ist, weiter bevorzugt im Wesentlichen in der Mitte des Deckels (2) zwischen dem vorderen Ende (2a) und dem hinteren Ende (2b) des Deckels (2).

4. Armlehne nach einem der vorhergehenden Ansprüche, wobei das vordere Ende (2a) des Deckels (2), wenn der Deckel (2) der Armlehne (1) in der geöffneten Position ist, der Öffnung (4) des Armlehnenfachs (3) im Wesentlichen benachbart positioniert ist und/oder vorzugsweise dem ersten Ende (5a) des Scharnierarms (5) im Wesentlichen benachbart positioniert ist.

5. Armlehne nach einem der vorhergehenden Ansprüche, wobei das vordere Ende (2a) des Deckels (2) in die Lage versetzt wird, mindestens 40%, vorzugsweise mindestens 60%, der Länge (L) der Öffnung (4) des Armlehnenfachs (3) der Öffnung (4) des Armlehnenfachs (3) benachbart oder in deren Nähe zu gleiten, wenn der Deckel (2) aus der geschlossenen Position in die offene Position verschoben wird, wobei das hintere Ende (2b) des Deckels (2) während des Verschiebens vertikal bezüglich der vertikalen Achse (x) in die nach oben gehende Richtung verschoben wird.

6. Armlehne nach einem der vorhergehenden Ansprüche, wobei der Deckel (2) der Armlehne (1) Haltemittel umfasst, wobei die Haltemittel des Deckels (2) zum Halten des Deckels (2) in der geöffneten Position angeordnet sind.

7. Kit, umfassend einen Fahrzeugsitz und eine Armlehne (1) nach einem der vorhergehenden Ansprüche, wobei der Fahrzeugsitz der Armlehne zugeordnet ist.

## Revendications

1. Accoudoir (1) pour un siège de véhicule, ledit accoudoir (1) comprenant un couvercle pivotant (2) et un compartiment d'accoudoir (3) comportant une ouverture (4), ladite ouverture (4) comportant des première et seconde extrémités (4a, 4b), ledit couvercle (2) comportant une extrémité avant (2a) et une extrémité arrière (2b), la référence à ladite extrémité avant (2a) ou arrière (2b) dudit accoudoir étant par rapport à un siège de véhicule associé audit accoudoir, ledit couvercle (2) étant déplaçable entre une position ouverte et une position fermée,
dans lequel ledit couvercle (2) est installé de manière pivotante de façon à ce que, lorsqu'il se trouve dans ladite position ouverte, ladite extrémité avant (2a) dudit couvercle (2) se trouve à proximité de ladite ouverture (4) dudit compartiment d'accoudoir (3) et ladite extrémité arrière (2b) dudit couvercle (2) se trouve à distance de ladite ouverture (4) dudit compartiment d'accoudoir (3) par rapport à un axe vertical (x), de telle sorte que ladite extrémité avant (2a) dudit couvercle (2) soit orientée vers le bas et ladite extrémité arrière (2b) dudit couvercle (2) soit orientée vers le haut,
dans lequel ledit couvercle (2) est installé de manière pivotante sur ledit compartiment d'accoudoir par le biais d'un bras d'articulation (5), ledit bras d'articulation (5) comportant des première et seconde extrémités (5a, 5b), et
dans lequel ladite extrémité avant (2a) dudit couvercle (2) est apte à glisser à côté ou à proximité de ladite ouverture (4) dudit compartiment d'accoudoir (3), lorsque ledit couvercle (2) est déplacé de ladite position fermée à ladite position ouverte, ladite extrémité arrière (2b) dudit couvercle (2) étant, lors dudit déplacement, déplacée verticalement par rapport audit axe vertical (x) dans une direction allant vers le haut.

2. Accoudoir selon la revendication 1, dans lequel ledit bras d'articulation (5) est formé par un élément droit s'étendant entre lesdites première et seconde extrémités (5a, 5b) dudit bras d'articulation (5).

3. Accoudoir selon la revendication 1 ou 2, dans lequel ladite première extrémité (5a) dudit bras d'articulation (5) est raccordée de manière pivotante audit compartiment d'accoudoir (3) essentiellement au niveau de ladite première extrémité (4a) de ladite ouverture (4), et ladite seconde extrémité (5b) dudit bras d'articulation (5) est raccordée de manière pivotante audit couvercle (2) au niveau d'une section centrale (Cs) dudit couvercle (2), plus préférablement essentiellement au centre dudit couvercle (2) entre ladite extrémité avant (2a) et ladite extrémité arrière (2b) dudit couvercle (2).

4. Accoudoir selon l'une quelconque des revendications précédentes, dans lequel, lorsque ledit couvercle (2) dudit accoudoir (1) se trouve dans ladite position ouverte, ladite extrémité avant (2a) dudit couvercle (2) est dans une position essentiellement adjacente à ladite ouverture (4) dudit compartiment d'accoudoir (3) et/ou de préférence essentiellement adjacente à ladite première extrémité (5a) dudit bras d'articulation (5).

5. Accoudoir selon l'une quelconque des revendications précédentes, dans lequel ladite extrémité avant (2a) dudit couvercle (2) est apte à glisser à côté ou à proximité de ladite ouverture (4) dudit compartiment d'accoudoir (3) sur au moins 40 %, de préférence au moins 60 %, de la longueur (L) de l'ouverture (4) du compartiment d'accoudoir (3), lorsque ledit couvercle (2) est déplacé de ladite position fermée à ladite position ouverte, ladite extrémité arrière (2b) dudit couvercle (2) étant, lors dudit déplacement, déplacée verticalement par rapport audit axe vertical (x) dans une direction allant vers le haut.

6. Accoudoir selon l'une quelconque des revendications précédentes, dans lequel ledit couvercle (2) dudit accoudoir (1) comprend des moyens de retenue, lesdits moyens de retenue dudit couvercle (2) étant prévus pour retenir ledit couvercle (2) dans ladite position ouverte.

7. Kit comprenant un siège de véhicule et un accoudoir (1) selon l'une quelconque des revendications précédentes, ledit siège de véhicule étant associé audit accoudoir.
